# EUROPÄISCHE PATENTSCHRIFT

(11) **EP 2 191 270 B1**
(45) Veröffentlichungstag und Bekanntmachung des Hinweises auf die Patenterteilung: **24.07.2013**
(21) Anmeldenummer: 08802125.8
(22) Anmeldetag: 12.09.2008
(51) Int. Cl.: G01N 33/543, B05C 5/00, B01L 3/00

(54) **VORRICHTUNG UND VERFAHREN ZUR REGENERIERUNG VON BIOSENSOREN**
DEVICE AND METHOD FOR THE REGENERATION OF BIOSENSORS
DISPOSITIF ET PROCÉDÉ POUR RÉGÉNÉRER DES BIOCAPTEURS

(30) Priorität: 18.09.2007 DE 102007044708
(43) Veröffentlichungstag der Anmeldung: 02.06.2010
(73) Patentinhaber: EADS Deutschland GmbH, 85521 Ottobrunn (DE)
(72) Erfinder: REIDT, Ulrich, 34613 Schwalmstadt (DE); FRIEDBERGER, Alois, 85667 Oberpframmern (DE); BAUR, Barbara, 80992 München (DE); EICKHOFF, Martin, 35398 Giessen-Allendorf (DE); LÜDERS, Tom, 81827 München (DE); MÜLLER, Gerhard, 85567 Grafing (DE)
(74) Vertreter: Schäfer, Matthias W.
(86) Internationale Anmeldenummer: PCT/EP2008/007572
(87) Internationale Veröffentlichungsnummer: WO 2009/036931

(56) Entgegenhaltungen:
- WO-A-02/01196
- WO-A1-97/45741
- WO-A1-2006/047760
- US-A1- 2004 071 888
- US-B1- 6 344 172
- NAIMUSHIN A N ET AL: "Airborne analyte detection with an aircraft-adapted surface plasmon resonance sensor system" SENSORS AND ACTUATORS B, ELSEVIER SEQUOIA S.A., LAUSANNE, CH, Bd. 104, Nr. 2, 24. Januar 2005 (2005-01-24), Seiten 237-248, XP004646014 ISSN: 0925-4005
- YU ET AL: "Detection of low-molecular-weight domoic acid using surface plasmon resonance sensor" SENSORS AND ACTUATORS B, ELSEVIER SEQUOIA S.A., LAUSANNE, CH, Bd. 107, Nr. 1, 27. Mai 2005 (2005-05-27), Seiten 193-201, XP005247633 ISSN: 0925-4005
- SCHLENSOG M D ET AL: "A Love-wave biosensor using nucleic acids as ligands" SENSORS AND ACTUATORS B, ELSEVIER SEQUOIA S.A., LAUSANNE, CH, Bd. 101, Nr. 3, 15. Juli 2004 (2004-07-15), Seiten 308-315, XP004519570 ISSN: 0925-4005

## Beschreibung

Die Erfindung betrifft ein System umfassend einen Biosensor mit einer Vorrichtung zur Regenerierung eines Biosensors, der ein auf einer Oberfläche eines Trägerkörpers aufgebrachtes immobilisiertes und biologisch aktives Material aufweist, das zur Wechselwirkung mit einer zu analysierenden Substanz ausgebildet ist sowie ein Verfahren zur Regenerierung dieses Systems.

Biosensoren der hier interessierenden Art sind mit biologischen Komponenten ausgestattet. Das Funktionsprinzip eines Biosensor basiert auf der direkten räumlichen Kopplung eines auf der Oberfläche eines Sensorelements immobilisierten biologisch aktiven Materials mit einem elektronischen, optischen oder anderen Signalumwandler (Transducer) und einem elektronischen Verstärker. Solche biologischen Materialien können beispielsweise Antikörper, Enzyme, Organellen, Mikroorganismen oder Nukleinsäuren sein.

Das immobilisierte biologische Material auf der Oberfläche des Sensors tritt in Wechselwirkung mit der zu analysierenden Substanz. Diese Wechselwirkung kann beispielsweise eine Enzym-Substrat WW oder eine Antikörper-Antigen WW sein. Dabei kommt es zu physikalischen Veränderungen, z.B. der Schichtdicke, des Brechungsindex, der Lichtabsorption, der elektrischen Ladung oder der lonenkonzentration (z.B. Änderung des pH-Wertes) spezifischer Ionen in der Umgebung der entsprechenden Oberfläche. Diese Veränderungen können durch Messeinheiten wie optische Sensoren, amperometrische Elektroden oder durch Feldeffekttransistoren, die nach dem potentiometrischen Verfahren arbeiten, bestimmt werden. Nach dem Messvorgang muss der Ausgangszustand des Systems jedoch wiederhergestellt werden. Die Messung der zu analysierenden Substanz mittels des Biosensors erfolgt demnach in drei Schritten: zunächst erfolgt die biochemische Reaktion der zu analysierenden Substanz durch das biologische System des Biosensors. Diese wird darauffolgend in ein elektrisches oder optisches Signal umgewandelt. Anschließend wird das Signal verarbeitet und verstärkt. Die Selekti vität und Empfindlichkeit bezieht ein Biosensor daher aus dem verwendeten biologischen System.

Die Anordnung des biologischen Materials auf dem Biosensor erfolgt durch einen Trägerkörper, auf dem das Material aufgebracht oder zwischen zwei Membranen eingeschlossen ist. Das biologische Material kann nach chemischer Funktionalisierung des Festkörpers auch direkt auf diesem immobilisiert sein. Ferner kann das biologische System auf eine Membran aufgebracht werden, wobei dieses anschließend mit der Oberfläche des Signalumwandlers verbunden wird. Die Anwendungsbereiche für Biosensoren in der Analytik von Wasser und Abwasser lassen sich unterteilen in Biosensoren zur Bestimmung von Einzelkomponenten, zur Bestimmung von Toxizität und Mutagenität sowie in Biosensoren zur Bestimmung des biochemischen Sauerstoffbedarfs (BSB). Beispiele sind hierbei die Messung einer Glukosekonzentration im Blut eines menschlichen Körpers, beispielsweise nach einer Operation. Die Glukosekonzentration konnte als Änderung des pH-Wertes bzw. als Änderung der Sauerstoffkonzentration infolge der Oxidation der Glukose unter katalytischer Wirkung der Enzyms- Glukose- Oxidase bestimmt werden.

Ein weiterer Biosensor ist bekannt zur Messung der Penicillin-Konzentration in einem Bioreaktor (Fermenter), in welchem Bakterienstämme kultiviert werden, die Penicillin exprimieren und in das Kulturmedium abgeben. Ist die Konzentration ausreichend hoch, kann der Stoff durch organische Trennungsmittel und nach einigen Fällungsreaktionen aus dem Kulturmedium extrahiert werden. Die biologische Komponente des hierbei verwendeten Sensors ist das Enzym Acylase. Das Penicillin-spaltende Enzym wird in eine Membran gebracht, auf der eine pH-Elektrode aufliegt. Nimmt nun die Penicillin-Konzentration im Medium zu, katalysiert das Enzym immer größere Mengen der Phenylessigsäure. Dadurch verändert sich der pH-Wert an der Elektrode. Folglich besteht die Möglichkeit, vom pH-Wert auf die Konzentration des Penicillins zu schließen.

Weiterhin offenbart die US 6 344 172 B1 ein Vorrichtung zur Separation und Analyse von Proteinen mittels eines Chromatographie-basierten Verfahrens. Dabei werden verschiedene Lösungen dem System über ein Mischventil zugegeben. Um die Absorption von Proteinen an die Oberfläche zu verhindern, wird als Material bevorzugt nichtporöse Partikel verwendet.

Die WO 97/45741 A1 offenbart ein Elektrode in einer Vorrichtung zur Durchführung von Immuntests. Dabei ist ein Elektrode, die ein große Oberfläche aufweißt, mit einem biologisch aktiven Absorptionsmittel ("immuno-sorbent") beschichtet. Dieses Absorptionsmittel wird ex situ auf die Elektrode aufgebracht und bis zur Verwendung bei 4°C gelagert. Anschließend wird die beschichtete Elektrode in ein System eingeführt und einem Flüssigkeitsstrom ausgesetzt. Durch Absorption von zu detektierendem biologischen Materialien durch das Absorptionsmittel auf der Elektrode können diese nachgewiesen werden. Ein Austausch des biologisch aktiven Absorptionsmittel ist hierbei prinzipiell mit einem Ausbau der Elektrode und der Gesamtemeuerung des Absorptionsmaterials verbunden.

Die WO 2006/047760 A1 offenbart einen Biosensor bei dem ein Schwingquarz (QCM), der eine Oberfläche aufweißt, die mit "Einfang Molekülen" beschichtet ist. Bei Absorption von zu detektierenden Molekülen, ändert sich Masse auf der Oberfläche des QCM und damit seine Frequenz. Über die Frequenzänderung des QCM kann die Massenzunahme und damit die zu detektierenden Moleküle bestimmt werden. Ein in situ Austausch der Einfang Moleküle zur Erweiterung des Detektionsbereichs auf andere zu detektierende Moleküle ist hier nicht möglich. Um dieses technische Problem zu lösen, werden verschieden Flächen mit verschiedenen Einfang Molekülen besetzt. Damit können verschiedene Molekülsorten detektiert werden. Jedoch können dann bei einer Messung auch ungewollte Moleküle nachgewiesen werden, womit die Sensibilität sinkt.

Weitere Anwendungen von Biosensoren können in der Bestimmung des Bakteriengehaltes von Badewässem oder von Abwässern einsetzen. Dabei besteht die Möglichkeit, auf einer schwingenden Membran Antikörper gegen bestimmte Bakterienarten aufzubringen. Schwimmen die entsprechenden Bakterien am Messfühler vorbei, heften sie sich an die Antikörper und verlangsamen dadurch die Schwingungen der Membran. Unterschreiten die Schwingungen einen bestimmten Wert, so wird ein entsprechendes Signal bereitgestellt.

Die Oberfläche des Biosensors kann z.B. aus Galliumnitrid (GaN) oder einem anderen optisch transparenten Halbleiter (HL) bestehen. Galliumnitrid ist ein optisch transparenter Halbleiter, der epitaktisch auf ebenfalls optisch transparenten Saphirsubstraten aufgewachsen werden kann. Diese Eigenschaft kann ausgenutzt werden, um durch eine auf der Substratrückseite positionierte Lichtquelle einen Fluoreszenzfarbstoff anzuregen, mit dem ein mobiler Antikörper markiert wurde. Dieser mobile Antikörper bindet ein Antigen, das gleichzeitig von einem unmarkierten immobilisierten Antikörper gebunden wird. Diese Art der Antigen-Antikörperbindung folgt dabei dem Prinzip des Sandwich ELISAs. Das von dem mobilen Antikörper emittierte Fluoreszenzlicht kann nach der Antigenerkennung von einem sensitiven Detektor erfasst werden. Eine Immobilisierung von Antikörpem auf der Halbleiteroberflache oder andere Materialien wie z.B. ZnO, SnO₂ oder Diamant kann durch unterschiedliche Methoden erfolgen, wie z.B. die Vernetzung mit Glutaraldehyd oder Bromcyanid (BrCN).

Eine weitere Möglichkeit der Immobilisierung von Antikörpern auf der Sensoroberfläche kann über eine Protein-Protein-Interaktion mit dem Protein G und Protein A erfolgen. Das Protein G besteht dabei aus Staphylococcus Aureus. Alternativ zum Protein G lässt sich Protein A verwenden. Ob eine Verwendung von Protein G oder Protein A für die Immobilisierung in Frage kommt, hängt häufig von der Herkunft der Antikörper ab, d.h. in welchem Organismus der Antikörper gebildet wurde. Beide Methoden können zusammen mit möglichen Crosslinkern verwendet werden. Dabei wird zunächst das jeweilige Protein A oder Protein G auf der Sensoroberfläche mit Hilfe von Glutaraldehyd immobilisiert. Nach der Vernetzung kann das eigentliche Aufbringen des Antikörpers über eine Protein-Protein-Interaktion an der F_{c}-Domäne des Antikörpers erfolgen. Vorteil dieser Methode ist eine optimale Ausnutzung der Antikörper auf der Sensoroberfläche. Als Beispiel für ein Antigen kann dabei das Bakterium Escherichia Coli (E. coli) dienen.

Derartige Biosensoren weisen den Nachteil auf, dass diese eine geringe Lebensdauer haben und durch eine geringe biologische Stabilität gekennzeichnet sind. Dabei muss beobachtet werden, dass eine Denaturierung der immobilisierten Protein- oder Nukleinsäurekomponenten auf der Oberfläche des Sensors erfolgt, so dass ein Abbau immobilisierter Makromoleküle wie Nukleinsäuren und Proteine eine nachteilhafte Eigenschaft derartiger Biosensoren bildet. Daraus resultiert das Erfordernis, die Lebensdauer und die Stabilität derartiger immobilisierter biologisch aktiver Materialien zu verbessern.

Es ist daher die Aufgabe der vorliegenden Erfindung, die vorgenannten Nachteile des Standes der Technik zu überwinden und ein System umfassend einen BioSensor mit einer Vorrichtung sowie ein Verfahren zur Regenerierung von Biosensoren zu schaffen. Um präzise und unverfälschte optische Messungen an der zu analysierenden Substanz durchzuführen, umfasst die Vorrichtung einen optisch transparenten Halbleiter mit einer Galliumnitrid-, einer Zinkoxid- oder einer Diamant- Beschichtung, insbesondere einer epitaktisch aufgewachsenen Galliumnitrid-Beschichtung, und einer auf der Substratrückenseite positionierten Lichtquelle

Diese Aufgabe wird ausgehend von einer Vorrichtung gemäß dem Oberbegriff des Anspruchs 1 sowie einem Verfahren gemäß dem Oberbegriff des Anspruchs 7 mit den jeweiligen kennzeichnenden Merkmalen gelöst. Vorteilhafte Weiterbildungen der Erfindung sind in den abhängigen Ansprüchen angegeben.

Die Erfindung schließt die technische Lehre ein, dass die Vorrichtung wenigstens eine Düse aufweist, durch die mit einer Pumpe wenigstens eine Lösung auf die Oberfläche des Trägerkörpers zur Spülung des biologisch aktiven Materials leitbar ist.

Die Erfindung geht dabei von dem Gedanken aus, eine Vorrichtung für ein automatisches Entfernen der biologischen Komponenten wie der Antikörper oder der Enzyme zu schaffen. Dabei können durch ein automatisches Mikrofluidsystem spezielle Lösungen über die Sensoroberfläche gepumpt werden, die verbrauchtes biologisch aktives Material wie Antikörper, Enzyme, Nukleinsäuren und andere Rückstände entfernen. Nach der Reinigung der Oberfläche erfolgt dann die erneute immobilisierung.

Vorteilhafterweise weist die Vorrichtung eine Ventilanordnung auf, mittels der wahlweise verschiedene Lösungen mittels der Düse und der Pumpe auf die Oberfläche des Trägerkörpers leitbar sind. Das biologisch aktive Material des Biosensors weist dabei Antikörper, Enzyme, Organellen, Mikroorganismen, Proteine oder Nukleinsäuren auf. Ferner besitzt der Biosensor einen Signalumwandler, welcher ein Signal ausgibt, das mit einem Verstärker verstärkbar und einem Auswertesystem zuführbar ist.

Vorteilhafterweise ist die Zufuhr der wenigstens einen Lösung auf das biologisch aktive Material mittels der Düse als Mikrofluidiksystem ausgebildet. Dieses Mikrofluidiksystem kann in den Sensor integriert sein, so dass dieses gemeinsam mit dem Sensor die erfindungsgemäße Vorrichtung bildet. Das Ventilsystem kann dabei manuell oder automatisiert bedienbar sein, so dass je nach Erfordernis verschiedene Lösungen auf die Oberfläche des Trägerkörpers aufgebracht werden können. Im Sinne einer langen Lebensdauer können die Reagenzien gekühlt bevorratet werden.

Der Trägerkörper des Biosensors besteht als Halbleiter in Form einer Galliumnitrid-, einer Zinkoxid- oder einer Diamant-Beschichtung, die auf einem Trägermaterial aufgebracht wird. Das System ist dabei nicht auf eine einzige Düse beschränkt, sondern es können mehrere Düsen gleichzeitig verwendet werden, um die Oberfläche des Trägerkörpers zu spülen.

Die vorliegende Erfindung betrifft ferner ein Verfahren zur Regenerierung eines Biosensors mit der obenstehend beschriebenen Vorrichtung. Alle Schritte der Reinigung sowie der Immobilisierung der Oberfläche des Trägerkörpers können von einem automatisierten Fluidsystem durchgeführt werden. Die Hauptkomponenten des automatisierten Systems sind die Ventile, an die unterschiedliche Lösungen angeschlossen werden können. Ferner betrifft das System Pumpen, die die unterschiedlichen Lösungen über die Ventile ansaugen, und über Düsen auf die Sensoroberfläche leiten. Die Ventile, Pumpen und Düsen können entweder einfach oder mehrfach im System vorhanden sein. Folglich besteht nicht nur die Möglichkeit, die Oberfläche des Biosensors von den vorangehend verwendeten biologisch aktiven Materialien zu befreien, sondern durch die Spülung wird das biologisch aktive Material auf der Oberfläche des Trägerkörpers regeneriert und/oder sogar ausgetauscht. Der Prozess des Reinigens und erneuten Immobilisierens kann unterstützt werden durch temperierbare Fluide und/oder Sensorkomponenten, sowie durch Einkoppeln von Ultraschall.

Ein weiterer Vorteil einer automatisierten Biosensor-Regeneration ist der Austausch z.B. der enzymatischen Eigenschaft oder der Nukleinsäure. Hierzu wird z. B. das Enzym von der Sensoroberfläche mittels der Lösung entfernt und gegen ein anderes Enzym ausgetauscht. Der Austausch erfolgt durch die Wahl einer anderen Lösung durch die Ventilanordnung. Dabei muss lediglich der Signalumwandler derart ausgebildet sein, dass dieser für verschiedene Enzyme geeignet ist. Ferner muss der regenerierte Biosensor bei den spezifischen Immobilisierungsbedingungen ein reproduzierbares, kalibrierbares und möglichst lineares Verhalten besitzen.

Gemäß einer weiteren Ausführungsform der Erfindung werden die Antikörper auf der Oberfläche des Trägerkörpers durch das Lösen von Protein-Protein-Interaktionen entfernt. In der Affinitätschromatographie ist das Immobilisieren von Protein A oder G als Methode bekannt. Die Proteine werden in der Regel an eine Polymermatrix wie einer Sepharose gekoppelt und dann zur Aufreinigung von Antikörpern verwendet. Eine Kopplung von Protein G an Galliumnitrid, Halbleiteroberflächen oder andere Oberflächen bildet dabei den Vorteil der erfindungsgemäßen Regenerierung. Auch die anschließende Protein-Protein-Interaktion über die F_{c}-Domäne (Antikörper Fragment) des Antikörpers mit dem auf der Halbleiteroberfläche immobilisierten Protein G bildet dabei einen weiteren Vorteil.

Ferner besteht die Möglichkeit des automatischen Entfernens von Antikörpern über das Lösen der Protein-Protein-Interäktion mit dem Protein G. Durch die Protein-Protein-Wechselwirkung zwischen der F_{c}-Domäne des Antikörpers und dem Protein G ist es von Vorteil, den gebundenen Antikörper abzulösen. Hierzu wird eine exprimierte und gereinigte F_{c}-Domäne als Teil des Antikörpers im Überschuss auf den Biosensor gegeben. Die reine F_{c}-Domäne verdrängt den Antikörper von der Oberfläche und bindet anstelle des Antikörpers auf dem Protein G. Wird nun ein neuer Antikörper in hoher Konzentration auf den Proteinkomplex, Protein G und die F_{c}-Domäne gegeben, so verdrängt der neue Antikörper wiederum die F_{c}-Domäne von dem Protein G, so dass der Biosensor erneut für Messungen eingesetzt werden kann. Auch diese Regeneration kann in einem automatisierten Fluidsystem ablaufen, wobei die Regeneration des Biosensors erheblich beschleunigt wird.

Vorteilhafterweise werden die zu entfernenden und wieder zu immobilisierenden biologisch aktiven Materialien auf der Oberfläche des Trägerkörpers durch die Lösungen bereitgestellt, wobei der Vorgang der Spülung automatisiert ist.

Mit entsprechenden Chemikalien lässt sich die Oberfläche des Biosensors vollständig von Molekülen entfernen, so dass auch das Proteine G entfernt werden kann. Anschließend werden auch diese Moleküle wieder neu immobilisiert.

Eine weitere Anwendung besteht in der Immobilisierung von Nukleinsäuren. Hierbei werden einzelsträngige Nukleinsäuren auf der Sensoroberfläche, z. B. auf einen Halbleiter, aufgebracht und durch Hybridisierung kann eine zu detektierende komplementäre Nukleinsäure gebunden werden. Die komplementäre Nukleinsäure wird über Wasserstoffbrückenbindungen zwischen den Basenpaaren gekoppelt. Diese Nukleinsäure kann wiederum mit einem biologischen, chemischen oder physikalischen Material kovalent gekoppelt, d. h. markiert sein. Ausgehend von diesen markierten Nukleinsäuren kann dann das eigentliche Signal im Biosensor detektiert werden. Zur Regenierung des Biosensors kann die komplementäre Nukleinsäure chemisch oder thermisch durch eine andere komplementäre Nukleinsäure ersetzt werden.

Ferner besteht die Möglichkeit der Immobilisierung von Histidin-markierten Enzymen über die Interaktion mit gekoppeltem Nickel-Nitrilotriacetic Acid (Ni-NTA) oder einem anderen Metallchelat. Enzyme lassen sich dabei rekombinant mit einem Anhang aus Histidinen (HIS-Tag) herstellen. Diese sogenannten HIS-Tag-Enzyme binden mit den zusätzlichen Histidinen selektiv an Nickel-Ionen (Ni2+) oder anderen Metallionen. In der Biochemie nutzt man diese Eigenschaft zur Enzymreinigung. Hierbei wird das His-Tag-Enzym über immobilisiertes Nickel-Nitrilotriacetic Acid (Ni-NTA) oder einem anderen Metallchelat gebunden und nach mehreren Waschschritten mit Imidazol oder EDTA wieder abgelöst.

Durch eine Immobilisierung von Ni-NTA oder einem anderen Metallchelatliganden auf einem Halbleiter ist es zum einen möglich, ein Enzym effizient zu koppeln und zum anderen ist das Enzym leicht ablösbar und gegen ein anderes Enzym austauschbar. Das Ablösen und Austauschen gegen ein jeweils anderes Enzym erfolgt durch das automatisierte Fluidsystem.

Weitere, die Erfindung verbessernde Maßnahmen werden nachstehend gemeinsam mit der Beschreibung eines bevorzugten Ausführungsbeispiels der Erfindung anhand der Figuren näher dargestellt.

Es zeigt:
- Fig. 1: eine schematische Darstellung der Vorrichtung zur Regenerierung eines Biosensors, mittels der durch ein Ventilsystem verschiedene Lösungen (A-G) auf die Oberfläche eines Trägerkörpers eines Biosensors aufleitbar sind;
- Fig. 2: eine schematische Darstellung der Bindung eines Enzyms mit einem His-Tag an einer Sensoroberfläche über Nickel-Nitrilotriacetic Acid (NiNTA); und
- Fig. 3: eine schematische Darstellung der Bindung eines GST-Fusionsenzym über die Kopplung eines Substrats auf einer Sensoroberfläche.

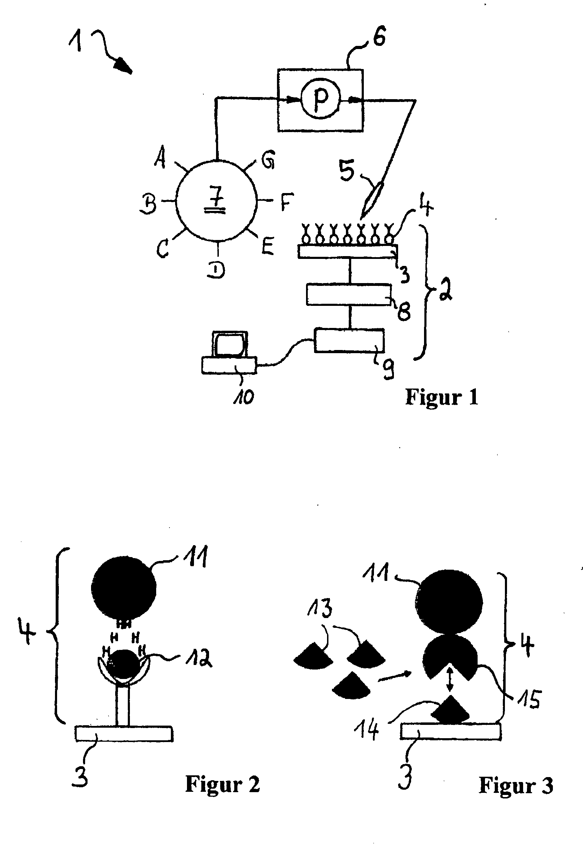

In Fig. 1 ist der Aufbau einer Vorrichtung 1 zur Regenerierung eines Biosensors 2 gezeigt. Der Biosensor umfasst einen Trägerkörper 3, auf dessen Oberfläche ein immobilisiertes biologisch aktives Material 4 aufgebracht ist. Der Biosensor 2 ist durch seine Hauptbestandteile dargestellt, welche den Trägerkörper 3, den Signalumwandler 8, den Verstärker 9 sowie ein Auswertesystem 10 umfassen. Das biologisch aktive Material 4 auf der Oberfläche des Trägerkörpers 3 ist zur besseren bildlichen Darstellung in vergrößerter Form gezeigt.

Die Vorrichtung 1 weist eine Düse 5 auf, durch die mittels einer Pumpe 6 wahlweise eine Lösung A-G auf die Oberfläche des Trägerkörpers 3 aufleitbar ist. Die Wahl der verschiedenen Lösungen A-G erfolgt durch eine Ventilanordnung 7, welche entweder automatisch oder manuell bedienbar ist. Die Lösungen A-G sind in jeweiligen Behältnissen aufgenommen, wobei die Lösungen jeweils verschiedene biologisch aktive Materialien umfassen. Die Darstellung der Düse 5 über der Oberfläche des Trägerkörpers 3 zur Spülung des biologisch aktiven Materials 4 ist lediglich schematisch vorgesehen, wobei das System auch als Mikrofluidsystem ausgebildet sein kann, so dass dieses im Trägerkörper 3 oder zumindest in einem Gehäuse des Biosensors 2 integriert sein kann.

Fig. 2 zeigt eine schematische Bindung eines Enzyms mit einem His-Tag an einer Sensoroberfläche über Nickel-Nitrilotriacetic Acid (Ni-NTA). Hierbei wird das His-Tag-Enzym über immobilisiertes Nickel-Nitrilotriacetic Acid (Ni-NTA) oder einem anderen Metallchelat gebunden und nach mehreren Waschschritten mit Imidazol oder EDTA wieder abgelöst. Oberhalb des Nickelions (Ni2+) mit dem Bezugszeichen 12 ist das Enzym 11 schematisch dargestellt, wobei die Bindung durch den G-Histidin-Tag durch mehrere H-Symbole angedeutet sind. Dabei bilden das Enzym 11 das biologisch aktive Material 4 auf der Oberfläche des Trägerkörpers 3 und das Nickelion 12 die bindende Komponente in die bindende Komponente in dem Mclekülkomplex.

In Fig. 3 ist schematisch die Bindung eines GST(Glutathion-S-Transferase)-Fusionsenzym über die Kopplung eines Substrates (reduziertes Glutathion) auf der Sensoroberfläche gezeigt. Das biologisch aktive Material 4 wird gebildet durch das Enzym 11, den GST-Tag 15, der kovalent über eine Peptidbindung an das Enzym 11 gebunden ist, und aus den freien Substraten 13 als auch dem gebundenen Substrat 14, welches als GST-Substrat immobilisiert ist. Die freien Substrate 13 dienen dabei zum Ablösen des GST-Tags von der Oberfläche des Trägerkörpers 3.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht.

**Bezugszeichenliste**

| | |
|---|---|
| **1** | Vorrichtung |
| **2** | Biosensor |
| **3** | Trägerkörper |
| **4** | biologisch aktives Material |
| **5** | Düse |
| **6** | Pumpe |
| **7** | Ventilanordnung |
| **8** | Signalumwandler |
| **9** | Verstärker |
| **10** | Auswertesystem |
| **11** | Enzym |
| **12** | Ni2+ |
| **13** | freies Substrat |
| **14** | immobilisiertes GST Substrat |
| **15** | GST-Tag |
| | |
| **A - G** | Lösungen |

## Patentansprüche

1. System, umfassend
einen Biosensor (2), der ein auf einer Oberfläche eines Trägerkörpers (3) aufgebrachtes immobilisiertes und biologisch aktives Material (4) aufweist, das zur Wechselwirkung mit einer zu analysierenden Substanz ausgebildet ist,
eine Vorrichtung (1) zur Regenerierung des Biosensors (2), wobei, die Vorrichtung (1) zumindest zwei Behältnisse mit jeweils unterschiedlichen Lösungen (A-G) aufweist und wenigstens eine Düse (5) dafür vorgesehen ist, mittels einer Pumpe (6) jeweils eine der Lösungen (A-G) auf die Oberfläche des Trägerkörpers (3) zur Spülung des biologisch aktiven Materials (4) zu leiten, wobei die Vorrichtung (1) eine Ventilanordnung (7) aufweist, mittels der wahlweise verschiedene Lösungen (A-G) mittels der Düse (5) und der Pumpe (6) nacheinander auf die Oberfläche des Trägerkörpers (3) leitbar sind;
eine Lichtquelle und
einen Detektor,
**dadurch gekennzeichnet, dass**
der Trägerkörper (3) als optisch transparenter Halbleiter in Form einer Galliumnitrid-, einer Zinkoxid- oder einer Diamant- Beschichtung, insbesondere einer epitaktisch aufgewachsenen Galliumnitridbeschichtung, die auf einem Trägermaterial aufgebracht ist, ausgebildet ist, wobei die Lichtquelle auf der Substratrückseite positioniertist.

2. System nach Anspruch 1,
**dadurch gekennzeichnet, dass** das biologisch aktive Material (4) des Biosensors (2) Antikörper, Enzyme, Organellen, Mikroorganismen, Proteine oder Nukleinsäuren aufweist.

3. System nach einem der Ansprüche 1 bis 2,
**dadurch gekennzeichnet, dass** der Biosensor (2) einen Signalumwandler (8) aufweist, welcher ein Signal ausgibt, das mit einem Verstärker (9) verstärkbar und einem Auswertesystem (10) zuführbar ist.

4. System nach einem der vorgenannten Ansprüche,
**dadurch gekennzeichnet, dass** die Zufuhr der wenigstens einen Lösung (A-G) auf das biologisch aktive Material (4) mittels der Düse (5) als Mikrofluidsystem ausgebildet ist.

5. System nach einen der vorgenannten Ansprüche,
**dadurch gekennzeichnet, dass** Reagenzien und/oder der Trägerkörper (3) temperierbar sind und/oder eine Kammer mit dem Trägerkörper (3) mit Ultraschall beaufschlagbar ist.

6. System nach Anspruch 1 - 5, **dadurch gekennzeichnet, dass** der Träger ein optisch transparentes Saphirsubstrat mit einer epitaktisch aufgewachsenen Galiumnitridbeschichtung ist.

7. Verfahren zur Regenerierung eines Biosensors (2) mit einer Vorrichtung (1) nach einem der Ansprüche 1-6,
**dadurch gekennzeichnet, dass** die spezifischen Bindungseigenschaften des biologisch aktiven Materials (4) ausgetauscht werden, wobei das vorhandene biologisch aktive Material (4) von der Oberfläche des Trägerkörpers (3) entfernt und ein anderes biologisch aktives Material aufgebracht wird.

8. Verfahren nach Anspruch 7,
**dadurch gekennzeichnet, dass** die Antikörper oder Enzyme auf der Oberfläche des Trägerkörpers (3) durch das Lösen von Protein-Protein-Interaktionen manuell oder automatisiert entfernt werden.

9. Verfahren nach Anspruch 7,
**dadurch gekennzeichnet, dass** das biologisch aktive Material wie Nukleinsäuren, Coenzyme, Substrate, oder andere Makromoleküle auf der Oberfläche des Trägerkörpers (3) durch das Lösen von physikalischen oder chemischen Bindungen manuell oder automatisiert entfernt werden.

10. Verfahren nach einem der Ansprüche 7 bis 8,
**dadurch gekennzeichnet, dass** die zu entfernenden und wieder zu immobilisiemden biologisch aktiven Materialien (4) auf der Oberfläche des Trägerkörpers (3) durch die Lösungen (A-G) bereitgestellt werden und der Vorgang der Spülung automatisiert ist.

11. Verfahren nach einem der Ansprüche 7 bis 10, wobei zumindest eine Lösung eine Molekülentfemungs-Lösung ist und zumindest eine andere Lösung ein biologisch aktives Material enthält.

## Claims

1. System, comprising
a biosensor (2) having an immobilised and biologically active material (4) which is applied to a surface of a carrier (3) and is designed to interact with a substance to be analysed,
a device (1) for regenerating the biosensor (2), wherein the device (1) has at least two containers each containing different solutions (A-G) and at least one nozzle (5) is provided in order to guide a respective one of the solutions (A-G) onto the surface of the carrier (3) by means of a pump (6) in order to rinse the biologically active material, wherein the device (1) has a valve arrangement (7) by means of which different solutions (A-G) can be guided selectively by means of the nozzle (5) and the pump (6) successively onto the surface of the carrier (3);
a light source and
a detector,
**characterised in that** the carrier (3) is formed as an optically transparent semiconductor in the form of a gallium nitride coating, a zinc oxide coating or a diamond coating, in particular an epitaxially grown gallium nitride coating, which is applied to a carrier material, wherein the light source is positioned on the rear face of the substrate.

2. System as claimed in Claim 1, **characterised in that** the biologically active material (4) of the biosensor (2) has antibodies, enzymes, organelles, microorganisms, proteins or nucleic acids.

3. System as claimed in any one of Claims 1 to 2, **characterised in that** the biosensor (2) has a signal converter (8) which emits a signal which can be amplified by an amplifier (9) and can be delivered to an evaluation system (10).

4. System as claimed in any one of the preceding claims, **characterised in that** the delivery of the at least one solution (A-G) onto the biologically active material (4) by means of the nozzle (5) is configured as a microfluid system.

5. System as claimed in any one of the preceding claims, **characterised in that** the reagents and/or the carrier can be temperature-controlled and/or a chamber with the carrier (3) can be subjected to ultrasound.

6. System as claimed in Claims 1 - 5, **characterised in that** the carrier is an optically transparent sapphire substrate with an epitaxially grown gallium nitride coating.

7. Method for regeneration of a biosensor (2) with a device (1) as claimed in any one of Claims 1 - 6, **characterised in that** the spccific binding properties of the biologically active material (4) are exchanged, wherein the biologically active material (4) present is removed from the surface of the carrier (3) and another biologically active material is applied.

8. Method as claimed in Claim 7, **characterised in that** the antibodies or enzymes on the surface of the carrier (3) are removed manually or in an automated manner by the release of protein-protein interactions.

9. Method as claimed in Claim 7, **characterised in that** the biologically active material such as nucleic acids, coenzymes, substrates or other macromolecules on the surface of the carrier (3) are removed manually or in an automated manner by release of physical or chemical bonds.

10. Method as claimed in any one of Claims 7 to 8, **characterised in that** the biologically active materials (4) to be removed and to be re-immobilised on the surface of the carrier (3) are provided by the solutions (A-G) and the rinsing step is automated.

11. Method as claimed in any one of Claims 7 to 10, wherein at least one solution is a molecule removal solution and at least one other solution contains a biologically active material.

## Revendications

1. Système comprenant
un biocapteur (2) qui présente un matériau à activité biologique (4) immobilisé et appliqué sur la surface d'un corps support (3) et qui est conçu de manière à être en interaction avec une substance à analyser,
un dispositif (1) pour la régénération du biocapteur (2), ledit dispositif (1) présentant au moins deux réservoirs contenant des solutions différentes (A-G) et au moins une buse (5) à travers laquelle une solution (A-G) peut être guidée, au moyen d'une pompe (6), sur la surface du corps support (3) pour rincer le matériau à activité biologique (4), ledit dispositif (1) présentant un ensemble de valves (7) grâce auquel plusieurs solutions (A-G) au choix peuvent être guidées tour à tour sur la surface du corps support (3) au moyen des buses (5) et de la pompe (6) ;
une source lumineuse et
un détecteur,
**caractérisé en ce que**
le corps support (3) constitue un semi-conducteur optiquement transparent présentant la forme d'un revêtement à base de nitrure de gallium, d'oxyde de zinc ou de diamant, présentant, en particulier, la forme d'un revêtement à base de nitrure de gallium obtenu par croissance épitaxiale appliqué sur un matériau support, la source lumineuse étant positionnée sur la face arrière du substrat.

2. Système selon la Revendication 1,
**caractérisé en ce que** le matériau à activité biologique (4) du biocapteur (2) présente des anticorps, des enzymes, des organelles, des micro-organismes, des protéines ou des acides nucléiques.

3. Système selon l'une quelconque des Revendications 1 à 2,
**caractérisé en ce que** le biocapteur (2) présente un convertisseur de signal (8) qui émet un signal pouvant être amplifié au moyen d'un amplificateur (9) et transmis à un système d'évaluation (10).

4. Système selon l'une quelconque des Revendications précédentes,
**caractérisé en ce que** l'apport d'au moins une solution (A-G) sur le matériau à activité biologique (4) au moyen de la buse (5) est réalisé sous forme de système micro-fluide.

5. Système selon l'une quelconque des Revendications précédentes,
**caractérisé en ce que** des réactifs et/ou le corps support (3) sont thermo-réglables et/ou **en ce qu'**une chambre contenant le corps support (3) peut être soumise à des ultrasons.

6. Système selon les Revendications 1 à 5,
**caractérisé en ce que** le support est un substrat en saphir optiquement transparent présentant un revêtement en nitrure de gallium obtenu par croissance épitaxiale.

7. Procédé pour régénérer un biocapteur (2) avec un dispositif (1) selon l'une quelconque des Revendications 1 à 6,
**caractérisé en ce que** les propriété de liaison spécifiques du matériau à activité biologique (4) peuvent être remplacées, le matériau à activité biologique (4) présent pouvant être retiré de la surface du corps support (3) et remplacé par un autre matériau à activité biologique (4).

8. Procédé selon la Revendication 7,
**caractérisé en ce que** les anticorps ou enzymes sur la surface du corps support (3) peuvent être retirés manuellement ou automatiquement par la dissolution des interactions protéine-protéine.

9. Procédé selon la Revendication 7,
**caractérisé en ce que** le matériau à activité biologique tel que les acides nucléiques, les coenzymes, les substrats ou les autres macromolécules présents sur la surface du corps support (3) peuvent être retirés manuellement ou automatiquement par la dissolution des liaisons physiques ou chimiques.

10. Procédé selon l'une quelconque des Revendications 7 à 8,
**caractérisé en ce que** les matériaux à activité biologique (4) sur la surface du corps support (3), qui sont retirés puis immobilisés une nouvelle fois, sont mis à la disposition par les solutions (A - G) et que le processus de rinçage est automatisé.

11. Procédé selon l'une quelconque des Revendications 7 à 10, dans lequel au moins une solution est une solution d'élimination des molécules et au moins une autre solution contient un matériau à action biologique.
